# EUROPÄISCHE PATENTSCHRIFT

(11) **EP 0 719 802 B1**
(45) Veröffentlichungstag und Bekanntmachung des Hinweises auf die Patenterteilung: **10.05.2000**
(21) Anmeldenummer: 95120125.0
(22) Anmeldetag: 20.12.1995
(51) Int. Cl.: C08F 110/06, C08F 10/00, C08F 4/642

(54) **Polyolefinwachs**
Polyolefin wax
Cire de polyoléfine

(30) Priorität: 28.12.1994 DE 4446923
(43) Veröffentlichungstag der Anmeldung: 03.07.1996
(73) Patentinhaber: Clariant GmbH, 65929 Frankfurt am Main (DE)
(72) Erfinder: Herrmann, Hans-Friedrich, Dr., D-64521 Dornheim (DE)

(56) Entgegenhaltungen:
- EP-A- 0 321 852
- EP-A- 0 571 882
- DE-A- 3 148 229
- DE-A- 3 904 468

## Beschreibung

Die vorliegende Erfindung betrifft ein Polyolefinwachs mit hohem Schmelzpunkt, verringerter Isotaxie, abgesenkter Kristallinität und verringerter Härte sowie ein Verfahren zu seiner Herstellung.

Die Herstellung von Polyolefinwachsen mit einer breiten Molekulargewichtsverteilung Mw/Mn und einem isotaktischen Index von 60 bis 80 % mittels Trägerkatalysator, Cokatalysator und Stereoregulator bei Temperaturen von über 95°C ist bekannt (vgl. DE-A 31 48 229). Als Molmassenregler müssen jedoch zusätzlich zu der hohen Temperatur auch große Mengen Wasserstoff eingesetzt werden. Zum Erreichen von für Wachse typischen Polymerisationsgraden übersteigt der Wasserstoff-Partialdruck dabei den Partialdruck des Olefins. Derartige Polymerisationsbedingungen bewirken jedoch einen deutlichen Olefinverlust durch Hydrierung zum Alkan und erniedrigte Katalysatoraktivitäten, die hohe Restaschegehalte der Produkte bedingen. Insbesondere die hohen Chlor und Titangehalte erfordern aufwendige Reinigungsschritte des Produkts.

Die Herstellung von 1-Olefinpolymerwachsen mit enger Molmassenverteilung und hoher Isotaktizität mit Metallocen-Katalysatoren (EP 321 852) ist bekannt. Für viele Wachs-Anwendungen ist die hohe Isotaxie und Härte dieser Produkte, welche sich in einer hohen Schmelzwärme von größer 80 [J/g] für Polypropylenwachse ausdrückt, nachteilig.

Die Herstellung eines 1-Olefinstereoblockpolymerwachs (EP 321 853) mit Metallocen-Katalysatoren, welche die Isotaxie durch eine hohe Zahl von Fehlinsertionen absenken, ist bekannt. Nachteilig ist die geringe Aktivität dieser Katalysator-Systeme und die fehlende Regelbarkeit der Isotaxie.

Die Herstellung von Polyolefinwachsen mit unterschiedlicher Isotaxie durch Veränderung der Polymerisationstemperatur (EP 416 566) ist bekannt. Nachteilig ist jedoch, daß die Aktivität des Katalysators stark mit der Polymerisationstemperatur abnimmt und, daß die erreichbaren Molekulargewichte niedrig und nicht unabhängig von der Isotaxie einstellbar sind.

Weiterhin ist bekannt, daß die Kristallinität durch Copolymerisation (EP 384 264) abgesenkt werden kann. Nachteilig ist die Erniedrigung des Schmelzpunktes der Copolymere gegenüber dem Schmelzpunkt des Homopolymers, welches den Anwendungsbereich einschränkt.

Es bestand somit die Aufgabe ein Polyolefinwachs zur Verfügung zu stellen, welches die Nachteile des Standes der Technik vermeidet und insbesondere eine abgesenkte Isotaxie und Härte bei gleichzeitig hohem Schmelzpunkt aufweist.

Die vorliegende Erfindung betrifft somit ein Polyolefin-Wachs, mit einer Schmelzviskosität von 0,1 bis 100000 mPas, bevorzugt 1 bis 60000 mPas, besonders bevorzugt 50 bis 60000 mPas bei 170°C, einer DSC-Schmelzwärme kleiner 80 J/g, einem DSC Schmelzpunkt von größer 130°C und einer Molmassen-Verteilung M_{w}/Mₙ von kleiner gleich 3. Bevorzugt sind Polypropylen-Wachse.

Die Polyolefin-Wachse der vorliegenden Erfindung lassen sich zu mindestens 10 Gew.-% mit Diethylether extrahieren. Eine Möglichkeit zur Bestimmung der Isotaxie von kristallinen Polyolefin-Wachsen ist die Extraktionsmethode mit einem Lösungsmittel im Soxleth-Extraktor, wobei die hochkristallinen isotaktischen Anteile ungelöst im Rückstand verbleiben. Der Ether-extrahierte Anteil entspricht dem ataktischen Anteilen des Polyolefin-Wachses.

Die vorliegende Erfindung betrifft außerdem ein Verfahren zur Herstellung von Polyolefin-Wachsen mit einer Schmelzviskosität von 50 bis 100000 mPas bei 170°C, einer DSC-Schmelzwärme kleiner 80 J/g, einem DSC Schmelzpunkt von größer 130°C und einer Molmassen-Verteilung M_{w}/Mₙ von kleiner gleich 3, in Gegenwart eines Katalysators, enthaltend eine stereorigide Metallocen-Verbindung A und einen Cokatalysator B, wobei die Metallocen-Verbindung A als Gemisch von racemischer-Form und meso-Form im Verhältnis rac/meso = < 0,5 eingesetzt wird.

Bei der racemischen Form (rac-Form) der stereorigiden Metallocen-Verbindung A sind die beiden Enantiomeren nur durch Spiegelung ineinander überführbar. Bei der meso-Form sind Bild- und Spiegelbild durch Drehung ineinander überführbar. Unter dem Begriff meso-Form wird auch der Fall verstanden, daß bei verschiedenartigen Liganden des Metallocens wie z.B. bei Dimethylsilyl(2-methyl-indenyl)(Indenyl)ZrCl₂ ein zweites Enantiomerenpaar entsteht, bei welchem die voluminöseren Teile der beiden Ligandensysteme jeweils übereinander liegen.

Die nachstehenden Verbindungen (b) und (c) bedeuten demnach die rac-Form und die nachstehenden Verbindungen (a) und (d) bedeuten die meso-Form. 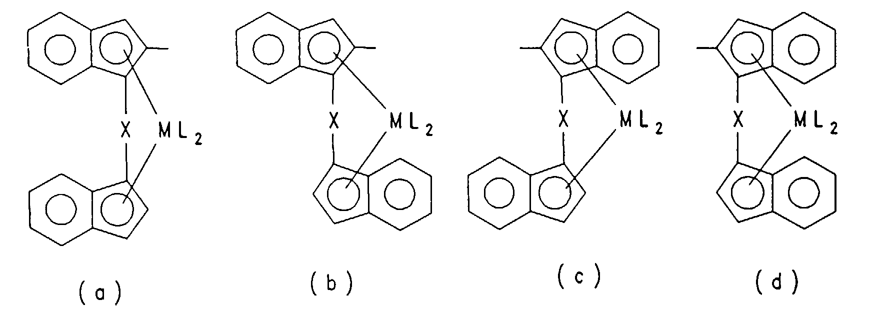 X = R⁷, ML₂ = M¹R¹⁰R¹¹ gemäß Formel I

Die stereorigide Metallocen-Verbindung A ist vorzugsweise ein Metallocen der Formel I 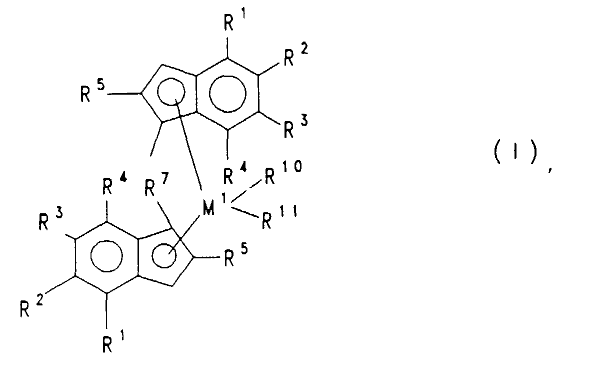 worin
M¹ Titan, Zirkon, Hafnium, Vanadium, Niob oder Tantal ist,
R¹, R², R³, R⁴ und R⁵ gleich oder verschieden sind und Wasserstoff, (C₁-C₂₀)Alkyl, (C₆-C₁₄)Aryl, (C₁-C₁₀)Alkoxy, (C₂-C₁₀)Alkenyl, (C₇-C₂₀)Arylalkyl, (C₇-C₂₀)Alkylaryl, (C₆-C₁₀)Aryloxy, (C₁-C₁₀)Fluoralkyl, (C₆-C₁₀)Halogenaryl, (C₂-C₁₀)Alkinyl, einen Rest -SiR⁶₃, wobei R⁶ für (C₁-C₁₀)Alkyl steht, ein Halogenatom oder einen heteroaromatischen Rest mit 5 oder 6 Ringgliedern, der ein oder mehrere Heteroatome enthalten kann, bedeuten, oder benachbarte Reste R¹ bis R⁴ bilden mit den sie verbindenden Atomen einen oder mehrere Ringe,
R⁷ ein Rest 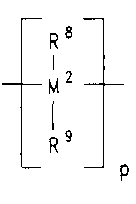 ist,
   wobei
M² Kohlenstoff, Silizium, Germanium oder Zinn bedeutet,
R⁸ und R⁹ gleich oder verschieden sind und Wasserstoff, (C₁-C₂₀)Alkyl, (C₆-C₁₄)Aryl, (C₁-C₁₀)Alkoxy, (C₂-C₁₀)Alkenyl, (C₇-C₂₀)Arylalkyl, (C₇-C₂₀)Alkylaryl, (C₆-C₁₀)Aryloxy, (C₁-C₁₀)Fluoralkyl, (C₆-C₁₀)Halogenaryl, (C₂-C₁₀)Alkinyl oder Halogen bedeuten, oder R⁸ und R⁹ zusammen mit dem sie verbindenden Atom einen Ring bilden, p 0, 1, 2 oder 3 ist und R¹⁰ und R¹¹ gleich oder verschieden sind und Wasserstoff, (C₁-C₁₀)Alkyl, (C₁-C₁₀)Alkoxy, (C₆-C₁₀)Aryl, (C₆-C₁₀)Aryloxy, (C₂-C₁₀)Alkenyl, (C₇-C₄₀)Arylalkyl, (C₇-C₄₀)Alkylaryl, (C₈-C₄₀)Arylalkenyl, Hydroxy oder ein Halogenatom bedeuten.

Die Verbindung der Formel I ist vorzugsweise dadurch gekennzeichnet, daß M¹ Zirkon oder Hafnium, insbesondere Zirkon, ist,
R¹, R², R³, R⁴ gleich oder verschieden sind und Wasserstoff, (C₁-C₁₀)Alkyl, (C₆-C₁₄)Aryl, (C₁-C₄)Alkoxy, (C₂-C₆)Alkenyl, (C₁-C₆)Fluoralkyl, ein Halogenatom oder einen heteroaromatischen Rest mit 5 oder 6 Ringgliedern, der ein oder mehrere Heteroatome enthalten kann, bedeuten, oder benachbarte Reste R¹ bis R⁴ bilden mit den sie verbindenden Atomen einen Ring, und R⁵ (C₁-C₁₀)Alkyl bedeutet,

M² Kohlenstoff oder Silizium, insbesondere Silizium, bedeutet, R⁸ und R⁹ gleich oder verschieden sind und Wasserstoff, (C₁-C₆)Alkyl, (C₆-C₁₀)Aryl, (C₁-C₆)Alkoxy, (C₂-C₄)Alkenyl, (C₇-C₁₀)Arylalkyl, (C₇-C₁₀)Alkylaryl bedeuten oder R⁸ und R⁹ zusammen mit dem sie verbindenden Atom einen Ring bilden, p 1 oder 2, bevorzugt 1, ist, und R¹⁰ und R¹¹ gleich oder verschieden sind und Wasserstoff, (C₁-C₃)Alkyl, insbesondere Methyl, (C₁-C₃)Alkoxy, (C₆-C₈)Aryl, (C₆-C₈)Aryloxy, (C₂-C₄)Alkenyl, (C₇-C₁₀)Arylalkyl, (C₇-C₁₀)Alkylaryl, (C₈-C₁₂)Arylalkenyl oder ein Halogenatom, bevorzugt Chlor, bedeuten.

Beispiele für die Metallocenkomponente des erfindungsgemäßen Katalysatorsystems sind die rac- und meso-Formen der folgenden Metallocenverbindungen:
Dimethylsilandiylbis(indenyl)zirkoniumdichlorid Dimethylsilandiylbis(tetrahydroindenyl)zirkoniumdichlorid Dimethylsilandiylbis(4-naphthyl-indenyl)zirkoniumdichlorid Dimethylsilandiylbis(2-methylbenzoindenyl)zirkoniumdichlorid Dimethylsilandiylbis(2-methyl-indenyl)zirkoniumdichlorid Dimethylsilandiylbis(2-methyl-tetrahydroindenyl)zirkoniumdichlorid Dimethylsilandiylbis(2-methyl-4-(1-naphthyl)-indenyl)zirkoniumdichlord Dimethylsilandiylbis(2-methyl-4-(2-naphthyl)-indenyl)zirkoniumdichlorid Dimethylsilandiylbis(2-methyl-4-phenyl-indenyl)zirkoniumdichlorid Dimethylsilandiylbis(2-methyl-4-t-butyl-indenyl)zirkoniumdichlorid Dimethylsilandiylbis(2-methyl-4-isopropyl-indenyl)zirkoniumdichlorid Dimethylsilandiylbis(2-methyl-4-ethyl-indenyl)zirkoniumdichlorid Dimethylsilandiylbis(2-methyl-4-α-acenaphth-indenyl)zirkoniumdichlorid Dimethylsilandiylbis(2,4-dimethyl-indenyl)zirkoniumdichlorid Dimethylsilandiylbis(2-ethyl-indenyl)zirkoniumdichlorid Dimethylsilandiylbis(2-ethyl-4-ethyl-indenyl)zirkoniumdichlorid Dimethylsilandiylbis(2-ethyl-4-phenyl-indenyl)zirkoniumdichlorid Dimethylsilandiylbis(2-methyl-4,5-benzo-indenyl)zirkoniumdichlorid Dimethylsilandiylbis(2-methyl-4,6 diisopropyl-indenyl)zirkoniumdichlorid Dimethylsilandiylbis(2-methyl-4,5 diisopropyl-indenyl)zirkoniumdichlorid Dimethylsilandiylbis(2,4,6-trimethyl-indenyl)zirkoniumdichlorid Dimethylsilandiylbis(2,5,6-trimethyl-indenyl)zirkoniumdichlorid Dimethylsilandiylbis(2,4,7-trimethyl-indenyl)zirkoniumdichlorid Dimethylsilandiylbis(2-methyl-5-isobutyl-indenyl)zirkoniumdichlorid Dimethylsilandiylbis(2-methyl-5-t-butyl-indenyl)zirkoniumdichlorid Methyl(phenyl)silandiylbis(2-methyl-4-phenyl-indenyl)zirkoniumdichlorid Methyl(phenyl)silandiylbis(2-methyl-4,6 diisopropyl-indenyl)zirkoniumdichlorid Methyl(phenyl)silandiylbis(2-methyl-4-isopropyl-indenyl)zirkoniumdichlorid Methyl(phenyl)silandiylbis(2-methyl-4,5-benzo-indenyl)zirkoniumdichlorid Methyl(phenyl)silandiylbis(2-methyl-4,5-(methylbenzo)-indenyl)zirkoniumdichlorid Methyl(phenyl)silandiylbis(2-methyl-4,5-(tetramethylbenzo)-indenyl)zirkoniumdichlorid Methy(phenyl)silandiylbis(2-methyl-4-α-acenaphth-indenyl)zirkoniumdichlorid Methyl(phenyl)silandiylbis(2-methyl-indenyl)zirkoniumdichlorid Methyl(phenyl)silandiylbis(2-methyl-5-isobutyl-indenyl)zirkoniumdichlorid 1,2-Ethandiylbis(2-methyl-4-phenyl-indenyl)zirkoniumdichlorid 1,2-Ethandiylbis(2-methyl-tetrahydroindenyl)zirkoniumdichlorid 1,2-Ethandiylbis(tetrahydroindenyl)zirkoniumdichlorid 1,4-Butandiylbis(2-methyl-4-phenyl-indenyl)zirkoniumdichlorid 1,2-Ethandiylbis(2-methyl-4,6 diisopropyl-indenyl)zirkoniumdichlorid 1,4-Butandiylbis(2-methyl-4-isopropyl-indenyl)zirkoniumdichlorid 1,4-Butandiylbis(2-methyl-4,5-benzo-indenyl)zirkoniumdichlorid 1,2-Ethandiylbis(2-methyl-4,5-benzo-indenyl)zirkoniumdichlorid 1,2-Ethandiylbis(2,4,7-trimethyl-indenyl)zirkoniumdichlorid 1,2-Ethandiylbis(2-methyl-indenyl)zirkoniumdichlorid 1,4-Butandiylbis(2-methyl-indenyl)zirkoniumdichlorid sowie auch die Dialkylderivate der obengenannten Metallocene wie z.B.: Dimethylsilandiylbis(indenyl)zirkoniumdimethyl Dimethylsilandiylbis(tetrahydroindenyl)zirkoniumdiethyl Dimethylsilandiylbis(2-methylbenzoindenyl)zirkoniumdimethyl Dimethylsilandiylbis(2-methyl-indenyl)zirkoniumdibutyl oder auch die Monoalkylderivate der obengenannten Metallocene wie z.B.: Dimethylsilandiylbis(indenyl)zirkoniumchlormethyl Dimethylsilandiylbis(tetrahydroindenyl)zirkoniumchlorethyl Dimethylsilandiylbis(2-methylbenzoindenyl)zirkoniumchlormethyl Dimethylsilandiylbis(2-methyl-indenyl)zirkoniumchlorbutyl
Besonders bevorzugt sind die rac- und meso-Formen der folgenden Metallocenverbindungen:
Dimethylsilandiylbis(2-methyl-4-α-acenaphth-indenyl)zirkoniumdichlorid, Dimethylsilandiylbis(2-ethyl-4-phenyl-indenyl)zirkoniumdichlorid,
Besonders geeignet sind die rac- und meso-Formen der folgenden Metallocen-Verbindungen:
Dimethylsilyl(2-Methyl-4,5-Benzoindenyl)₂ZrCl₂ Dimethylsilyl(2-Methyl-Indenyl)₂ZrCl₂ Dimethylsilyl(2-Methyl-Indenyl)(2-Methyl-4,5-Benzoindenyl)ZrCl₂ Dimethylsilyl(2-Methyl-4-Phenyl-Indenyl)₂ZrCl₂ Dimethylsilyl(2-Methyl-Indenyl)(2-Methyl-4-Phenyl-Indenyl)ZrCl₂ Dimethylsilyl(2-Methyl-4,6-diisopropyl-Indenyl)₂ZrCl₂ Dimethylsilyl(2,5,6-trimethyl-Indenyl)₂ZrCl₂ Dimethylsilyl(2-Methyl-4-Naphthyl-Indenyl)₂ZrCl₂

Bei der Synthese der in dem erfindungsgemäßen Verfahren eingesetzten Metallocen-Verbindung A liegt das Verhältnis von rac- zu meso-Form direkt nach der Metallocen-Synthese im allgemeinen zwischen 2 zu 1 und 0,5 zu 1. Durch Kristallisation läßt sich jedoch die gewünschte jeweils Form des Metallocens anreichern und das Verhältnis von rac- und meso-Form beliebig einstellen.

Eine weitere Möglichkeit zur Einstellung des rac/meso-Verhältnisses ist die Zugabe einer angereicherten z.B. meso-Form eines Metallocens zu einem rac/meso 1/1-Gemisch aus der Synthese. Die angereicherte meso-Form von Metallocenen entsteht in großen Mengen bei der Herstellung der rac-Metallocene für die Herstellung von hochisotaktischen Polyolefin-Formmassen.

Prinzipiell ist als Cokatalysator B in dem erfindungsgemäßen Verfahren jede Verbindung geeignet, die aufgrund ihrer Lewis-Acidität das neutrale Metallocen in ein Kation überführen und dieses stabilisieren kann ("labile Koordination"). Darüber hinaus soll der Cokatalysator oder das aus ihm gebildete Anion keine weiteren Reaktionen mit dem gebildeten Metallocenkation eingehen (EP 427 697). Als Cokatalysator wird bevorzugt eine Aluminiumverbindung und/oder eine Borverbindung verwendet.

Die Borverbindung hat bevorzugt die Formel R¹²ₓNH₄₋ₓBR¹³₄, R¹²ₓPH₄₋ₓBR¹³₄, R¹²₃CBR¹³₄ oder BR¹³₃, worin x eine Zahl von 1 bis 4, bevorzugt 3, bedeutet, die Reste R¹² gleich oder verschieden, bevorzugt gleich sind, und C₁-C₁₀-Alkyl oder C₆-C₁₈-Aryl sind, oder zwei Reste R¹² zusammen mit dem sie verbindenden Atomen einen Ring bilden, und die Reste R¹³ gleich oder verschieden, bevorzugt gleich sind, und C₆-C₁₈-Aryl sind, das durch Alkyl, Haloalkyl oder Fluor substituiert sein kann. Insbesondere steht R¹² für Ethyl, Propyl, Butyl oder Phenyl und R¹³ für Phenyl, Pentafluorophenyl, 3,5-Bistrifluoromethylphenyl, Mesityl, Xylyl oder Tolyl (EP 277 003, EP 277 004 und EP 426 638).

Bevorzugt wird als Cokatalysator eine Aluminiumverbindung wie Aluminoxan und/oder ein Aluminiumalkyl eingesetzt.

Besonders bevorzugt wird als Cokatalysator ein Aluminoxan, insbesondere der Formel IIa für den linearen Typ und/oder der Formel IIb für den cyclischen Typ verwendet, 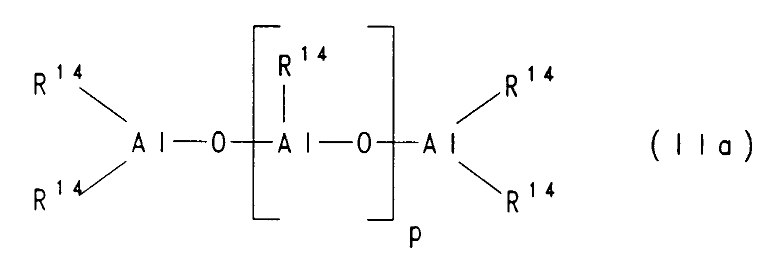 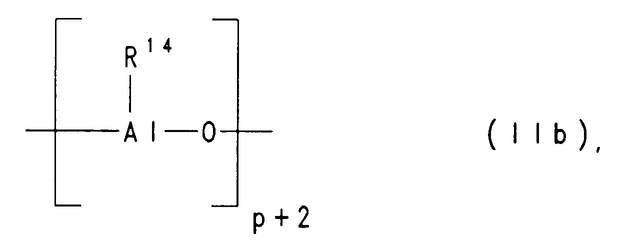 wobei in den Formeln IIa und IIb die Reste R¹⁴ gleich oder verschieden sind und Wasserstoff oder eine C₁-C₂₀-Kohlenwasserstoffgruppe wie eine C₁-C₁₈-Alkylgrupppe, eine C₆-C₁₈-Arylgruppe oder Benzyl bedeuten, und p eine ganze Zahl von 2 bis 50, bevorzugt 10 bis 35 bedeutet.

Bevorzugt sind die Reste R¹⁴ gleich und bedeuten Wasserstoff, Methyl, Isobutyl, Phenyl oder Benzyl, besonders bevorzugt Methyl.

Sind die Reste R¹⁴ verschieden, so sind sie bevorzugt Methyl und Wasserstoff oder alternativ Methyl und Isobutyl, wobei Wasserstoff oder Isobutyl bevorzugt in einem zahlenmäßigen Anteil von 0,01 bis 40 % (der Reste R¹⁴) enthalten sind.

Die Verfahren zur Herstellung der Aluminoxane sind bekannt (DE 4 004 477).

Die genaue räumliche Stuktur der Aluminoxane ist nicht bekannt (J. Am. Chem. Soc. (1993) 115, 4971). Beispielsweise ist denkbar, daß sich Ketten und Ringe zu größeren zweidimensionalen oder dreidimensionalen Strukturen verbinden.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, die erfindungsgemäße Metallocenverbindung vor dem Einsatz in der Polymerisationsreaktion mit einem Cokatalysator, insbesondere einem Aluminoxan vorzuaktivieren. Dadurch wird die Polymerisationsaktivität deutlich erhöht. Die Voraktivierung der Metallocenverbindung wird vorzugsweise in Lösung vorgenommen. Bevorzugt wird dabei die Metallocenverbindung in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.%, jeweils bezogen auf die Gesamtlösungsmenge. Das Metallocen kann in der gleichen Konzentration eingesetzt werden, vorzugsweise wird es jedoch in einer Menge von 10⁻⁴ - 1 mol pro mol Aluminoxan eingesetzt. Die Voraktivierungsdauer beträgt 5 Minuten bis 60 Stunden, vorzugsweise 5 bis 60 Minuten. Man arbeitet bei einer Temperatur von -78 bis 100°C, vorzugsweise 0 bis 70°C.

Dabei wird die Metallocenverbindung bevorzugt in einer Konzentration, bezogen auf das Übergangsmetall, von 10⁻³ bis 10⁻⁸, vorzugsweise 10⁻⁴ bis 10⁻⁷ mol Übergangsmetall pro dm³ Lösemittel bzw. pro dm³ Reaktorvolumen angewendet. Das Aluminoxan, wird bevorzugt in einer Konzentration von 10⁻⁶ bis 10⁻¹ mol, vorzugsweise 10⁻⁵ bis 10⁻² mol pro dm³ Lösemittel bzw. pro dm³ Reaktorvolumen verwendet. Die anderen genannten Cokatalysatoren werden in etwa äquimolaren Mengen zu der Metallocenverbindung verwendet. Prinzipiell sind aber auch höhere Konzentrationen möglich.

Bevorzugt wird in dem erfindungsgemäßen Verfahren die Metallocenverbindung mit dem Cokatalysator außerhalb des Polymerisationsreaktors in einem separaten Schritt unter Verwendung eines geeigneten Lösemittels umgesetzt. Dabei kann eine Trägerung vorgenommen werden.

Im dem erfindungsgemäßen Verfahren kann mit Hilfe der Metallocenverbindung eine Vorpolymerisation erfolgen. Zur Vorpolymerisation wird bevorzugt das (oder eines der) in der Polymerisation eingesetzte(n) Olefin(e) verwendet.

Die in dem erfindungsgemäßen Verfahren eingesetzte stereorigide Metallocen-Verbindung A wird bevorzugt außerhalb des Polymerisationsreaktors in einem separaten Schritt mit dem Cokatalysator B unter Verwendung eines geeigneten Lösungsmittels umgesetzt. Dabei kann eine Trägerung vorgenommen werden. Hierzu kann die Metallocenverbindung zunächst mit dem Träger und anschließend mit dem Cokatalysator umgesetzt werden. Es kann auch zunächst der Cokatalysator geträgert werden und anschließend mit der Metallocenverbindung umgesetzt werden. Auch ist es möglich des Reaktionsprodukt von Metallocen-Verbindung und Cokatalysator zu trägern. Bei diesen Trägerungs-Verfahren bleibt das Verhältnis von rac- zu meso-Form des Metallocens, wegen der ähnlichen chemischen Eigenschaften, unverändert. Geeignete Trägermaterialien sind beispielsweise Silikagele, Aluminiumoxide oder andere anorganische Träger wie Magnesiumchlorid oder Graphit. Die Herstellung eines geträgerten Cokatalysators kann beispielsweise wie in EP 567952 beschrieben durchgeführt werden. Ein geeignetes Trägermaterial ist auch ein Polymerpulver, wie beispielsweise in EP 563917 beschrieben.

Der Katalysator kann als Lösung, als Suspension oder in geträgerter Form trocken dosiert werden. Als Lösungs- bzw. Suspensionsmittel für Katalysator oder Cokatalysator sind allgemein Kohlenwasserstoffe wie Toluol, Heptan, Hexan, Pentan, Butan oder Propan sowie technische Dieselöle geeignet.

Das erfindungsgemäße Polyolefin-Wachs ist aufgrund der breiten Einstellbarkeit der Härte für einen weiten Anwendungsbereich geeignet, z.B. als Rezeptur-Komponente in Tonern bei hoher Härte, oder als Basismasse für Pigmentpräparation, als Hilfmittel bei der Verarbeitung von Kunststoffen und als Schmelzekleber ("Hotmelt") bei Produkten niedriger Härte.

Mit diesem Verfahren sind Polyolefinwachse mit einer engen Molekulargewichts-Verteilung von kleiner 3 herstellbar. Wird der ataktische Anteil durch eine Ether-Extraktion der Gesamtprobe angereichert, so ist das GPC-Spektrum des mit Ether extrahierbaren niedrig isotaktischen Anteils ist mit dem GPC der Gesamtprobe nahezu identisch.

Das erfindungsgemäße Verfahren kann in Lösung, in Suspension oder in der Gasphase bei Temperaturen von 40 bis 120°C, bei einem Olefin-Partialdruck von 1 bis 50 bar, bei einem Wasserstoff-Partialdruck von 0 bis 10 bar, unter Zugabe (bezogen auf Al) von 0,01 bis 10 mmol Cokatalysator/Liter Suspensionsmittel und von einem Katalysator/Cokatalysator Verhältnis von 1:1 bis 1:1000 durchgeführt werden.

In dem erfindungsgemäßen Verfahren werden bevorzugt Olefine der Formel R^{a}CH = CHR^{b} polymerisiert, wobei R^{a} und R^{b} gleich oder verschieden sind und ein Wasserstoffatom oder einen Alkylrest mit 1 bis 28 C-Atomen bedeuten, oder R^{a} und R^{b} mit den sie verbindenden C-Atomen einen oder mehrere Ringe bilden. Beispiele für solche Olefine sind Propylen, 1-Buten, 1-Penten, 1-Hexen, 4-Methyl-1-penten, 1-Octen, Norbornen oder Norbornadien. Bevorzugt ist Propylen.

Zur Polymerisation kann vor der Zugabe des Katalysators zusätzlich eine weitere aluminiumorganische Verbindung C, wie z.B. Trimethylaluminium, Triethylaluminium, Triisobutylaluminium oder Isoprenylaluminium zur Inertisierung des Polymerisationssystems in einer Konzentration von 1 bis 0,001 mmol Al pro dm³ Reaktorvolumen zugegeben werden.

Die Polymerisation kann diskontinuierlich oder kontinuierlich, ein- oder mehrstufig durchgeführt werden, wobei durch den nur geringen zeitabhängigen Abfall der Polymerisationsaktivität beliebige Verweilzeiten realisiert werden können.

Die Molmasse der erfindungsgemäßen Wachse kann mit Wasserstoff entsprechend der gewünschten Schmelzviskosität geregelt. Hierdurch sind Schmelzviskositäten von PP-Wachsen gemessen bei 170°C im Bereich von 50 bis 100000 mPas zugänglich. Zur Molmassenregelung kann außerdem die Polymerisationstemperatur verändert werden.

Die erfindungsgemäßen Polyolefinwachse eignen sich insbesondere als Additive, z.B. für Kunststoffe.

### Beispiele:

Schmelzpunkte und Schmelzwärmen wurden durch DSC-Messungen bei 20°C/min Aufheiz- und Abkühlgeschwindigkeit aus dem 2. Aufheizen bestimmt.
Die Schmelzviskositäten sind bei 170°C mit einem Rotationsviskosimeter bestimmt.
Die Bestimmung der IR-Isotaxie erfolgt nach J.P. Luongo, J. Appl. Polym. Chem., 3, 302 (1960).

Die Bestimmung der Fließhärte erfolgt nach einer Kugeldruckmethode, die in den Einheitsmethoden der Deutschen Gesellschaft für Fettchemie (DGF) unter M-III 9a (57) veröffentlicht ist.

### Beispiel 1:

In einem inerten 100 dm³-Reaktor, wie in EP 602 509 beschrieben, wurden 30 kg Propen, 42 mmol Triethylaluminium vorgelegt, unter Rühren mit 170 Upm auf 60°C temperiert und 0,5 bar Wasserstoff zudosiert.
Parallel hierzu werden 30 mg Dimethylsilyl-bis-2-methylbenzoindenyl-zirkondichlorid mit einem rac/meso-Verhältnis 1/8 in 100 ml toluolischer Methylaluminoxan-Lösung gelöst und 15 Minuten gerührt.
Die Polymerisation wird durch Zupumpen der Katalysator-Lösung über 20 Minuten gestartet. Durch Regelung der Kühlung läßt man die Innentemperatur des Reaktors auf 70°C ansteigen. Wasserstoff wurde dosiert und gemäß GC auf 1,5 Vol% konstant gehalten. Nach 1 Stunde wurde die Polymerisation mit CO₂ gestoppt und die Suspension im Aufarbeitungsgefäß, nach Abdestillieren des Propylens durch Aufschmelzen aufgearbeitet.
Es resultieren 7,0 kg PP-Wachs mit einer Schmelzviskosität bei 170°C beträgt 1800 mPas. Die Kenndaten sind in Tabelle 1 zusammengefaßt.

### Beispiel 2:

Beispiel 1 wurde mit 16 mg des gleichen Metallocens bei rac/meso = 1/6 durchgeführt. Ausbeute 5,67 kg. Kenndaten sind in Tabelle 1 zusammengefaßt.

### Beispiel 3:

Beispiel 1 wurde mit 15,3 mg des gleichen Metallocens bei rac/meso = 1/2,9 durchgeführt. Ausbeute 6,6 kg. Kenndaten sind in Tabelle 1 zusammengefaßt.

### Beispiel 4:

Beispiel 1 wurde mit 15 mg des gleichen Metallocens bei rac/meso = 1/2,7 mit 2,8 Vol% Wasserstoff durchgeführt. Ausbeute 11,55 kg. Kenndaten sind in Tabelle 1 zusammengefaßt.

### Vergleichsbeispiel 1:

Beispiel 1 wurde mit 10 mg des gleichen Metallocens bei rac/meso = 12/1 durchgeführt. Ausbeute 8,5 kg. Kenndaten sind in Tabelle 1 zusammengefaßt.

**Tabelle 1**

| Beispiel | 1 | 2 | 3 | 4 | V1 |
|---|---|---|---|---|---|
| rac/meso: | 1/8 | 1/6 | 1/2,9 | 1/2,7 | 12/1 |
| kg/mg Kat | 0,23 | 0,35 | 0,43 | 0,77 | 0,85 |
| Schmelzviskosität [mPas] | 1800 | 1740 | 1500 | 282 | 1910 |
| Tm (°C) | 145 | 147 | 142 | 144 | 144 |
| Schmelzwärme (J/g) | 48 | 52 | 68 | 77 | 107 |
| IR-Isotaktischer Index | 48% | 62% | 61% | 78% | 92% |
| Fließhärte [bar] | 180 | 223 | 560 | 810 | > 1000 |
| Ether extrahierbar | 47% | | 37% | 14% | 3% |
| Mn [g/mol] | 8810 | | 9065 | 4180 | 9085 |
| Mw/Mn | 2,5 | | 2,4 | 2,8 | 2,5 |
| Mn Ether-Extrakt | 11300 | | 11200 | | 11300 |
| Mw/Mn ( " ) | 2,5 | | 2,5 | | 2,5 |

### Beispiel 5:

Beispiel 1 wurde mit 65 mg Dimethylsilylbis(2-methylindenyl)zirkondichlorid mit rac/meso = 1/5 und bei Regelung mit 1,5 Vol% Wasserstoff durchgeführt. Ausbeute 6,8 kg. Kenndaten sind in Tabelle 2 zusammengefaßt.

### Vergleichsbeispiel 2:

Beispiel 5 wurde mit 22 mg des gleichen Metallocens bei rac/meso = 1/1 durchgeführt. Ausbeute 15,2 kg. Kenndaten sind in Tabelle 2 zusammengefaßt.

### Beispiel 6:

Beispiel 1 wurde mit 70 mg Dimethylsilyl(2-Methylindenyl)(2-Methyl-4,5 benzoindenyl)zirkondichlorid mit rac/meso = 1/6 und bei Regelung mit 1 Vol% Wasserstoff durchgeführt. Ausbeute 10,4 kg. Kenndaten sind in Tabelle 2 zusammengefaßt.

### Vergleichsbeispiel 3:

Beispiel 6 wurde mit 25 mg des gleichen Metallocens bei rac/meso = 1/1 durchgeführt. Ausbeute 7,4 kg. Kenndaten sind in Tabelle 2 zusammengefaßt.

### Beispiel 7:

Beispiel 1 wurde mit 21,6 mg
Dimethylsilyl(2-Methyl-4-Phenylindenyl)zirkondichlorid mit rac/meso = 1/5,6 und bei Regelung mit 9,2 Vol% Wasserstoff durchgeführt. Ausbeute 6,5 kg. Kenndaten sind in Tabelle 2 zusammengefaßt.

### Vergleichsbeispiel 4:

Beispiel 7 wurde mit 20 mg des gleichen Metallocens bei rac/meso = 1/1 durchgeführt. Ausbeute 9,6 kg. Kenndaten sind in Tabelle 2 zusammengefaßt.

**Tabelle 2**

| Beispiel | 5 | V2 | 6 | V3 | 7 | V4 |
|---|---|---|---|---|---|---|
| rac/meso | 1/5 | 1/1 | 1/6 | 1/1 | 1/5,6 | 1/1 |
| kg/mg Kat | 0,104 | 0,691 | 0,149 | 0,296 | 0,3 | 0,48 |
| Schmelzviskosität [mPas] | 2300 | 3180 | 1830 | 2000 | 2266 | 1410 |
| Tm (°C) | 140 | 140 | 138 | 138 | 157 | 152 |
| Schmelzwärme (J/g) | 75 | 125 | 70 | 107 | 76 | 110 |
| IR-Isotaktischer Index | 77% | 86% | 72% | 83% | 79% | 91% |
| Fließhärte [bar] | 910 | > 1000 | 810 | > 1000 | 817 | > 1000 |
| Ether extrahierbar | 12,5% | n.d. | 16,2% | n.d. | n.d. | |
| Mn [g/mol] | 11600 | | 9400 | | | |
| Mw/Mn | 2,5 | | 2,4 | | | |
| Mn Ether-Extrakt | 8430 | | 7330 | | | |
| Mw/Mn ( " ) | 2,6 | | 2,9 | | | |

### Vergleichsbeispiel 5:

Der Vergleichsversuch zu Beispiel 3 in DE 3148229 wurde nachgearbeitet. Es resultiert ein Polypropylen-Wachs mit folgenden Eigenschaften:

| | |
|---|---|
| Schmelzviskosität [mPas] | 1810 |
| Tm (°C) | 145,5 |
| Schmelzwärme (J/g) | 35 |
| IR-Isotaktischer Index | 70% |
| Fließhärte [bar] | 510 |
| Ether extrahierbar | 39% |
| Mn [g/mol] | 2600 |
| Mw/Mn | 6,9 |
| Mn Ether-Extrakt | 1570 |
| Mw/Mn ( " ) | 4,6 |
| Mn Extraktionsrückstand | 5280 |
| Mw/Mn ( " ) | 5,5 |

## Patentansprüche

1. Polypropylen-Wachs, mit einer Schmelzviskosität von 50 bis 100000 mPas bei 170°C, einer DSC-Schmelzwärme kleiner 80 J/g, einem DSC Schmelzpunkt von größer 130°C und einer Molmassen-Verteilung Mw/Mn von kleiner gleich 3.

2. Verfahren zur Herstellung eines Polyolefin-Wachses mit einer Schmelzviskosität von 50 bis 100000 mPas bei 170°C, einer DSC-Schmelzwärme kleiner 80 J/g, einem DSC Schmelzpunkt von größer 130°C und einer Molmassen-Verteilung Mw/Mn von kleiner gleich 3, in Gegenwart eines Katalysators, enthaltend eine Metallocen-Verbindung A und einen Cokatalysator B, wobei die Metallocen-Verbindung A als Gemisch von rac- und meso-Form mit rac/meso = < 0,5 eingesetzt wird.

## Claims

1. A polypropylene wax having a melt viscosity of from 50 to 100,000 mPas at 170°C, a DSC heat of fusion less than 80 J/g, a DSC melting point of greater than 130°C and a molecular weight distribution M_{w}/Mₙ of less than or equal to 3.

2. A process for preparing a polyolefin wax having a melt viscosity of from 50 to 100,000 mPas at 170°C, a DSC heat of fusion less than 80 J/g, a DSC melting point of greater than 130°C and a molecular weight distribution M_{w}/Mₙ of less than or equal to 3, in the presence of a catalyst comprising a metallocene compound A and a cocatalyst B, with the metallocene compound A being used as a mixture of rac and meso forms in a rac/meso ratio of < 0.5.

## Revendications

1. Cire polypropylénique ayant une viscosité à chaud de 50 à 100000 mPas à 170°C, une chaleur de fusion ACD inférieure à 80 J/g et un point de fusion ACD supérieur à 130°C et une répartition de masse molaire Mw/Mn infériure égale à 3.

2. Procédé de préparation d'une cire polyoléfinique ayant une viscosité à chaud de 50 à 100000 mPas à 170°C, une chaleur de fusion ACD inférieure à 80 J/g, un point de fusion ACD supérieur à 130°C et une répartition de masse molaire Mw/Mn inférieure égale à 3, en présence d'un catalyseur contenant un composé du type métallocène A et un cocatalyseur B, le composé du type métallocène A étant utilisé sous forme de mélange des formes rac et méso avec un rapport rac/méso = <0,5.
